# EUROPEAN PATENT APPLICATION

(11) **EP 2 975 507 A1**
(43) Date of publication of application: **20.01.2016**
(21) Application number: 13877466.6
(22) Date of filing: 21.08.2013
(51) Int. Cl.: G06F 3/048

(54) **TOUCH-TYPE TERMINAL AND METHOD THEREOF FOR LOCATING PROMPT BOX**

(30) Priority: 14.03.2013 CN 201310081776
(71) Applicant: ZTE Corporation, Guangdong Province 518057 (CN)
(72) Inventor: FANG, Heyi, Shenzhen Guangdong Province 518057 (CN)
(74) Representative: Novagraaf Technologies
(86) International application number: PCT/CN2013/081978
(87) International publication number: WO 2014/139268

(57) **Abstract**

Disclosed are a touch-type terminal and a method thereof for locating a prompt box. The method includes: receiving a slide gesture instruction and obtaining, according a preset coordinate system, coordinates of a start touch point which is corresponding to the slide gesture instruction and is on a touchscreen; when a prompt box pops up, dividing the touchscreen into multiple touch regions according to a size of the prompt box; counting the number M of times of the slide gesture instructions being received after a terminal is turned on, and calculating, according to the coordinates of the start touch points, the number of the start touch points which are corresponding to the slide gesture instructions received in the M times and are distributed on each touch region; and locating the prompt box in a touch region where the start touch points corresponding to the maximum number of slide gesture instructions are distributed on the touchscreen. By means the touch-type terminal and the method thereof for locating a prompt box in the present invention, it is achieved that a prompt box is located to a target touch region of a touchscreen, so that a user does not need to lift a wrist when the user performs a touch and slide operation; in addition, it is also achieved that the user can hold the touch-type terminal by using a single hand and perform a touch and slide operation, thereby improving the effect of user experience.

## Description

### TECHNICAL FIELD

The present invention relates to the field of communication technology, and in particular, to a touch-type terminal and a method thereof for locating a prompt box.

### BACKGROUND ART

Since a touch-screen input mode is easy to use, such touch-screen input mode gets more and more popular in intelligent electronic products.

With the rapid development of intelligent terminals, intelligent terminals such as smart phones are tend to have big screens. The number of users of big-screen smart phones and tablet PCs is also increasing.

Existing touch input modes are relatively inconvenient in the process of using a big-screen intelligent terminal, for example, when a big-screen intelligent terminal adopting a touch input mode is used, operations needs to be performed by a hand constantly moving. Since the screen is big, operations of touch input cannot be achieved by a single band.

Moreover, for the conventional touch-type intelligent terminals, when an operation of exit is performed, the position of a popping prompt box is set at the middle and upper parts of a big screen. If a big-screen touch-type intelligent terminal is used, a user has to lift his/her wrist to move his/her fingers to the middle and upper parts to implement a click operation, which brings about great inconvenience to the user.

### SUMMARY OF THE INVENTION

The embodiments of the present invention provide a touch-type terminal and a method for locating a prompt box thereof, enabling a user to locate a prompt box in a target touch region on a touchscreen as needed, so that a user does not need to lift a wrist when performing a touch and slide operation, thereby achieving that the touch-type terminal can be hold and the touch and slide operation can be made by a single hand.

The embodiments of the present invention provide a method for locating a prompt box of a touch-type terminal, and the method includes:
receiving a slide gesture instruction and acquiring, according to a preset coordinate system, coordinates of a start touch point corresponding to the slide gesture instruction on a touchscreen;
dividing the touchscreen into a plurality of touch regions according to the size of a prompt box when the prompt box pops up;
counting the number of times M of the slide gesture instruction being received after start-up and calculating the number of times the start touch points corresponding to the slide gesture instructions received in M times on the touchscreen are distributed on each touch region according to the coordinates of a start touch point corresponding to a slide gesture instruction received each time on the touchscreen;
and locating the prompt box in a touch region where the start touch points corresponding to the maximum number of slide gesture instructions are distributed on the touchscreen.

Preferably, counting the number of times M of the slide gesture instruction being received after start-up and calculating the number of times the start touch points corresponding to the slide gesture instructions on the touchscreen are distributed on each touch region according to the coordinates of a start touch point corresponding to a slide gesture instruction each time on the touchscreen specifically comprise:
counting the number of times M of the slide gesture instruction being received after start-up, and when M is greater than a preset threshold value N, calculating the number of times the start touch points corresponding to N slide gesture instructions currently received on the touchscreen are distributed on each touch region.

Preferably, counting the number of times M of the slide gesture instruction being received after start-up and calculating the number of times the start touch points corresponding to the slide gesture instructions on the touchscreen are distributed on each touch region according to the coordinates of a start touch point corresponding to a slide gesture instruction each time on the touchscreen specifically comprise:
counting the number of times M of the slide gesture instruction being received after start-up, and when M is less than or equal to the preset threshold value N, calculating the number of times the start touch points corresponding to the slide gesture instructions received in M times on the touchscreen are distributed on each touch region.

Preferably, after counting the number of times M of the slide gesture instruction being received after start-up and calculating the number of times the start touch points corresponding to the slide gesture instructions received in M times on the touchscreen are distributed on each touch region according to the coordinates of a start touch point corresponding to a slide gesture instruction received each time on the touchscreen, the method further comprises:
when the number of times the start touch points corresponding to the slide gesture instructions received in M times on the touchscreen are distributed on each touch region are the same, locating the prompt box at an initial position.

The embodiments of the present invention further provide a touch-type terminal, includes:
an acquisition module, configured to receive a slide gesture instruction and acquire coordinates of a start touch point corresponding to the slide gesture instruction on a touchscreen according to a preset coordinate system;
a dividing module, configured to divide the touchscreen into a plurality of touch regions according to the size of a prompt box when the prompt box pops up.
a counting module, configured to count the number of times M of the slide gesture instruction being received after start-up and calculate the number of times the start touch points corresponding to the slide gesture instructions received in M times on the touchscreen are distributed on each touch region according to the coordinates of a start touch point corresponding to a slide gesture instruction received each time on the touchscreen;
and a locating module, configured to locate the prompt box in a touch region where the start touch points corresponding to the maximum number of slide gesture instructions are distributed on the touchscreen.

Preferably, the counting module is also specifically configured to count the number of times M of the slide gesture instruction being received after start-up, and when M is greater than a preset threshold value N, calculate the number of times the start touch points corresponding to N slide gesture instructions currently received on the touchscreen are distributed on each touch region.

Preferably, the counting module is also specifically configured to count the number of times M of the slide gesture instruction being received after start-up, and when M is less than or equal to the preset threshold value N, calculate the number of times the start touch points corresponding to the slide gesture instructions received in M times on the touchscreen are distributed on each touch region.

Preferably, the locating module is also configured to, when the number of times the start touch points corresponding to the slide gesture instructions received in M times on the touchscreen are distributed on each touch region are the same, locate the prompt box at an initial position.

In the touch-type terminal and the method for locating a prompt box thereof provided by the embodiments of the present invention, by means of dividing a touchscreen into a plurality of touch regions according to the size of a prompt box, counting the number of times M of slide gesture instruction being received after start-up and before the prompt box pops up, calculating the number of times the start touch points corresponding to the slide gesture instructions received in M times on the touchscreen are distributed on each touch region, and locating the prompt box in a touch region where the start touch points corresponding to the maximum number of slide gesture instructions are distributed on the touchscreen, it is achieved that a prompt box is located to a target touch region of a touchscreen, so that a user does not need to lift a wrist when performing a touch and slide operation, and in addition, it is also achieved that the user can hold the touch-type terminal and perform a touch and slide operation by a single hand, which is convenient in operation, thereby the user experience is improved effectively.

### BRIEF DESCRIPTION OF THE DRAWINGS

Fig. 1 shows a flowchart of an embodiment of a method for locating a prompt box of a touch-type terminal of the present invention;
Fig. 2 shows a structural schematic diagram of a touchsceen coordinate system in a touch-type terminal of the embodiments of the present invention;
Fig. 3 shows a structural schematic diagram of an embodiment of a touch-type terminal of the present invention.

Implementation, functional features and advantages of embodiments of the present invention will be further described with reference to accompanying drawings.

### DETAILED DESCRIPTION OF THE EMBODIMENTS

It should be understood that specific embodiments described here are only used for illustrating the present invention and not intended to limit the present invention.

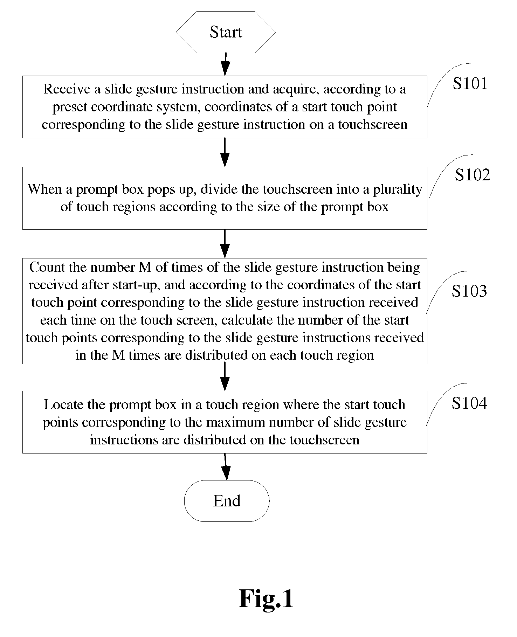

Referring to Fig. 1, one embodiment of a method for locating a prompt box of a touch-type terminal of the present invention is provided, which comprises:
Step S101, receive a slide gesture instruction and acquire, according to a preset coordinate system, coordinates of a start touch point corresponding to the slide gesture instruction on a touchscreen.

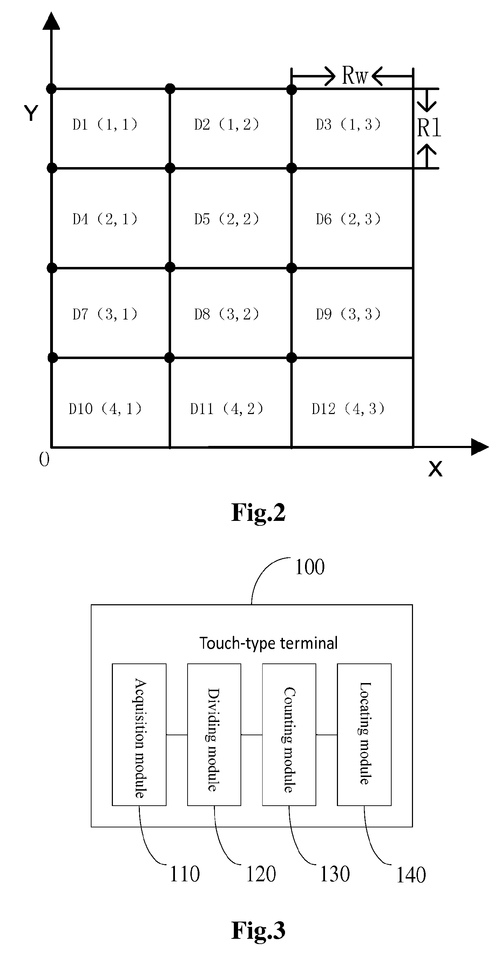

The coordinate system involved in this step is a preset touchscreen coordinate system in the touch-type terminal. Referring to Fig. 2, the touchscreen coordinate system is XOY, and the coordinates of the start touch point is namely coordinates in the touch screen coordinate system.

The above-mentioned slide gesture instruction in this step is generated after a user performs a touch action on a touchscreen and slides for a certain distance from the start touch point. The sliding distance herein has to exceed a set threshold value. Namely, when a user performs a touch action on a touchscreen, the touch-type terminal firstly determines whether the touch action has a certain distance of sliding from a start touch point on the touchscreen; if it does not, no response is made; and if it does, then whether the sliding distance arrives at or exceeds the set threshold value is determined. If it arrives at or exceeds same, then a slide gesture instruction is generated. If the sliding distance fails to arrive at the set threshold value, no response is made.

Moreover, in this step, the start touch point is a centre point of a start touch region on a touchscreen when a user performs a touch action on a touchscreen. If the start touch region is circular, then a corresponding start touch point is the centre point of the circular start touch region.
Step S102, when a prompt box pops up, divide the touchscreen into a plurality of touch regions according to the size of the prompt box.

In this step, dividing the touchscreen into a plurality of touch regions is specifically as follows: divide the touchscreen into N (N=N1*Nw) touch regions, where Nw=Sw/Rw, N1=S1/R1, Sw represents the width of the touchscreen, Rw represents the width of the prompt box, Nw represents the number of lengthways regions divided on the whole touchscreen, and Nw is an integer taken from the result of Sw being divided by Rw, S1 represents the length of the screen, R1 represents the length of the prompt box, N1 represents the number of crosswise regions divided on the whole screen, and N1 is an integer taken from the result of S1 being divided by R1. The touchscreen coordinate system herein is XOY, and the touchscreen is divided into N (N=N1*Nw) rectangular touch regions. Each touch region herein can be represented by a pair of figures, for example, a touch region D can be represented as (x, y), where x>0 and x<=Nw, y>0 and y<=N1, and for example, a touch region D1 is represented as (1, 1); a touch region D2 is represented as (1, 2); and a touch region Dn is represented as (N1, Nw). The coordinates of the point of the upper left hand corner of each touch region are (Rw(y-1), R1(N1-x+1)).
Step S103, count the number of times M of the slide gesture instruction being received after start-up and calculate the number of times the start touch points corresponding to the slide gesture instructions received in M times on a touchscreen are distributed on each touch region according to the coordinates of a start touch point corresponding to a slide gesture instruction received each time on the touchscreen.

In this step, the number of the start touch points corresponding to the slide gesture instructions in each touch region is calculated according to the case that a coordinate point of a start touch point corresponding to a slide gesture instruction is distributed in which touch regions.
Step S103 specifically includes the following processing: count the number of times M of the slide gesture instruction being received after start-up; when M is greater than a set threshold value N, calculate the number of times the start touch points corresponding to N slide gesture instructions currently received on the touchscreen are distributed on each touch region; and when M is less than or equal to the set threshold value N, then calculate the number of times the start touch points corresponding to the slide gesture instructions received in M times on the touchscreen are distributed on each touch region.
Step S104, locate the prompt box in a touch region where the start touch points corresponding to the maximum number of slide gesture instructions are distributed on the touchscreen.

Preferably, the above-mentioned embodiment of the method for locating a prompt box of a touch-type terminal also includes, apart from step S103, the following processing: when the number of times the start touch points corresponding to the slide gesture instructions received in M times on the touchscreen are distributed on each touch region are the same, the prompt box is located at an initial position.

In this embodiment, the number of times the start touch points corresponding to the slide gesture instructions on the touchscreen are distributed on each touch region may be the same or not; when they are not the same, the prompt box is located in a touch region where the start touch points corresponding to the maximum number of slide gesture instructions are distributed on the touchscreen; and if they are the same, the prompt box is located at an initial position, i.e. the prompt box stays at its original position without changing.

In the embodiment of the method for locating a prompt box of a touch-type terminal provided by the present invention, by means of dividing a touchscreen into a plurality of touch regions according to the size of a prompt box, counting the number of times M of slide gesture instruction being received after start-up and before the prompt box pops up, calculating the number of times the start touch points corresponding to the slide gesture instructions received in M times on the touchscreen are distributed on each touch region, and locating the prompt box in a touch region where the start touch points corresponding to the maximum number of slide gesture instructions are distributed on the touchscreen, it is achieved that a prompt box is located to a target touch region of a touchscreen, so that a user does not need to lift a wrist when performing a touch and slide operation, and in addition, it is also achieved that the user can hold the touch-type terminal and perform a touch and slide operation by a single hand, which is convenient in operation, thereby improving the effect of user experience.

The touch-type terminal described in the embodiment above can be a touch-type smart phone, tablet PC, etc.

Referring to Fig 3, an embodiment of a touch-type terminal 100 of the present invention is provided. The touch-type terminal includes: an acquisition module 110, a dividing module 120, a counting module 130, and a locating module 140. The acquisition module 110 is configured to receive a slide gesture instruction and acquire, according to a preset coordinate system, coordinates of a start touch point corresponding to the slide gesture instruction on a touchscreen. The dividing module 120 is configured to, when a prompt box pops up, divide the touchscreen into a plurality of touch regions according to the size of the prompt box. The counting module 130 is configured to count the number of times M of the slide gesture instruction being received after start-up and calculate the number of times the start touch points corresponding to the slide gesture instructions received in M times on a touchscreen are distributed on each touch region according to the coordinates of a start touch point corresponding to a slide gesture instruction received each time on the touchscreen. The locating module 140 is configured to locate the prompt box in a touch region where the start touch points corresponding to the maximum number of slide gesture instructions are distributed on the touchscreen.

The coordinate system involved in this embodiment is a preset touchscreen coordinate system in the touch-type terminal. Referring to Fig. 2, the touchscreen coordinate system is XOY, and the coordinates of the start touch point is namely coordinates in the touchscrren coordinate system.

The slide gesture instruction described in this embodiment is generated after a user performs a touch action on a touchscreen and slides for a certain distance from the start touch point. The sliding distance herein has to exceed a set threshold value. Namely, when a user performs a touch action on a touchscreen, the touch-type terminal firstly determines whether the touch action has a certain distance of sliding from a start touch point on the touchscreen; if it does not, no response is made; and if it does, then whether the sliding distance arrives at or exceeds the set threshold value is determined. If it arrives at or exceeds same, then a slide gesture instruction is generated. If the sliding distance fails to arrive at the set threshold value, no response is made.

Moreover, the start touch point described in this embodiment is a centre point of a start touch region on a touchscreen when a user performs a touch action on a touchscreen. If the start touch region is circular, then a corresponding start touch point is the centre point of the circular start touch region.

Referring to Fig. 2, in this embodiment, the dividing module 120 divides the touchscreen into a plurality of touch regions, which is specifically as follows: divide the touchscreen into N (N=N1*Nw) touch regions, where Nw=Sw/Rw, N1=S1/R1, Sw represents the width of the touchscreen, Rw represents the width of the prompt box, Nw represents the number of lengthways regions divided on the whole touchscreen, and Nw is an integer taken from the result of Sw being divided by Rw, S1 represents the length of the screen, R1 represents the length of the prompt box, N1 represents the number of crosswise regions divided on the whole screen, and N1 is an integer taken from the result of S1 being divided by R1. The touchscreen coordinate system herein is XOY, and the touchscreen is divided into N (N=N1*Nw) rectangular touch regions. Each touch region herein can be represented by a pair of figures, for example, a touch region D can be represented as (x, y), where x>0 and x<=Nw, y>0 and y<=N1, and for example, a touch region D1 is represented as (1, 1); a touch region D2 is represented as (1, 2); and a touch region Dn is represented as (N1, Nw). The coordinates of the point of the upper left hand corner of each touch region are (Rw(y-1), R1(N1-x+1)).

In this embodiment, the number of the start touch points corresponding to the slide gesture instructions in each touch region is calculated according to the case that a coordinate point of a start touch point corresponding to a slide gesture instruction is distributed in which touch regions.

Preferably, in the above-mentioned embodiment of the touch-type terminal 100, the counting module 130 is also specifically configured to count the number of times M of the slide gesture instruction being received after start-up, and when M is greater than a set threshold value N, calculate the number of times the start touch points corresponding to N slide gesture instructions currently received on the touchscreen are distributed on each touch region.

Preferably, in the above-mentioned embodiment of the touch-type terminal 100, the counting module 130 is also specifically configured to count the number of times M of the slide gesture instruction being received after start-up, and when M is less than or equal to the set threshold value N, calculate the number of times the start touch points corresponding to the slide gesture instructions received in M times on the touchscreen are distributed on each touch region.

Preferably, in the above-mentioned embodiment of the touch-type terminal 100, the locating module 140 is also configured to, when the number of times the start touch points corresponding to the slide gesture instructions received in M times on the touchscreen are distributed on each touch region are the same, locate the prompt box at an initial position of the prompt box.

In this embodiment, the number of times the start touch points corresponding to the slide gesture instructions on the touchscreen are distributed on each touch region may be the same or not; when they are not the same, the locating module 140 locates the prompt box in a touch region where the start touch points corresponding to the maximum number of slide gesture instructions are distributed on the touchscreen; and if they are the same, the locating module 140 locates the prompt box at an initial position, i.e. the prompt box stays at its original position without changing.

In the embodiment of the touch-type terminal 100 provided by the present invention, by means of dividing a touchscreen into a plurality of touch regions according to the size of a prompt box, counting the number of times M of the slide gesture instruction being received after start-up and before the prompt box pops up, calculating the number of times the start touch points corresponding to the slide gesture instructions received in M times on the touchscreen are distributed on each touch region, and locating the prompt box in a touch region where the start touch points corresponding to the maximum number of slide gesture instructions are distributed on the touchscreen, it is achieved that a prompt box is located to a target touch region of a touchscreen, so that a user does not need to lift a wrist when performing a touch and slide operation, and in addition, it is also achieved that the user can hold the touch-type terminal and perform a touch and slide operation by a single hand, which is convenient in operation, thereby improving the effect of user experience.

The touch-type terminal 100 described in the embodiments above can be a touch-type smart phone, tablet PC, etc.

It is to be understood that the above description is only the preferred embodiments of the present invention and are not intended to limit the patent scope of the present invention. Any equivalent replacements of the structure or the flow based on the contents of the specification and drawings of the present invention, or direct or indirect application of the equivalent replacements in other related technical fields shall fall within the scope of protection of the present invention.

## Claims

1. A method for locating a prompt box of a touch-type terminal, **characterized by** comprising:
receiving a slide gesture instruction and acquiring, according to a preset coordinate system, coordinates of a start touch point corresponding to the slide gesture instruction on a touchscreen;
dividing the touchscreen into a plurality of touch regions according to the size of a prompt box when the prompt box pops up;
counting the number of times M of the slide gesture instruction being received after start-up and calculating the number of times the start touch points corresponding to the slide gesture instructions received in M times on the touchscreen are distributed on each touch region according to the coordinates of a start touch point corresponding to a slide gesture instruction received each time on the touchscreen; and
locating the prompt box into a touch region where the start touch points corresponding to the maximum number of slide gesture instructions are distributed on the touchscreen.

2. The method for locating a prompt box of a touch-type terminal according to claim 1, **characterized in that** the step of counting the number of times M of the slide gesture instruction being received after start-up and calculating the number of times the start touch points corresponding to the slide gesture instructions on the touchscreen are distributed on each touch region according to the coordinates of a start touch point corresponding to a slide gesture instruction received each time on the touchscreen specifically comprise:
counting the number of times M of the slide gesture instruction being received after start-up, and when M is greater than a preset threshold value N, calculating the number of times the start touch points corresponding to N slide gesture instructions currently received on the touchscreen are distributed on each touch region.

3. The method for locating a prompt box of a touch-type terminal according to claim 1, **characterized in that** the step of counting the number of times M of the slide gesture instruction being received after start-up and calculating the number of times the start touch points corresponding to the slide gesture instructions on the touchscreen are distributed on each touch region according to the coordinates of a start touch point corresponding to a slide gesture instruction received each time on the touchscreen specifically comprise:
counting the number of times M of the slide gesture instruction being received after start-up, and when M is less than or equal to the preset threshold value N, calculating the number of times the start touch points corresponding to the slide gesture instructions received in M times on the touchscreen are distributed on each touch region.

4. The method for locating a prompt box of a touch-type terminal according to any one of claims 1-3, **characterized in that**, after counting the number of times M of the slide gesture instruction being received after start-up and calculating the number of times the start touch points corresponding to the slide gesture instructions received in M times on the touchscreen are distributed on each touch region according to the coordinates of a start touch point corresponding to a slide gesture instruction received each time on the touchscreen, the method further comprises:
when the number of times the start touch points corresponding to the slide gesture instructions received in M times on the touchscreen are distributed on each touch region are the same, locating the prompt box at an initial position.

5. A touch-type terminal, **characterized by** comprising:
an acquisition module, configured to receive a slide gesture instruction and acquire coordinates of a start touch point corresponding to the slide gesture instruction on a touchscreen according to a preset coordinate system;
a dividing module, configured to divide the touchscreen into a plurality of touch regions according to the size of a prompt box when the prompt box pops up;
a counting module, configured to count the number of times M of the slide gesture instruction being received after start-up and calculate the number of times the start touch points corresponding to the slide gesture instructions received in M times on the touchscreen are distributed on each touch region according to the coordinates of a start touch point corresponding to a slide gesture instruction received each time on the touchscreen; and
a locating module, configured to locate the prompt box in a touch region where the start touch points corresponding to the maximum number of slide gesture instructions are distributed on the touchscreen.

6. The touch-type terminal according to claim 5, **characterized in that**,
the counting module is further configured to count the number of times M of the slide gesture instruction being received after start-up, and when M is greater than a preset threshold value N, calculate the number of times the start touch points corresponding to N slide gesture instructions currently received on the touchscreen are distributed on each touch region.

7. The touch-type terminal according to claim 5, **characterized in that**,
the counting module is further configured to count the number of times M of the slide gesture instruction being received after start-up, and when M is less than or equal to the preset threshold value N, calculate the number of times the start touch points corresponding to the slide gesture instructions received in M times on the touchscreen are distributed on each touch region.

8. The touch-type terminal according to any one of claims 5-7, **characterized in that**,
the locating module is further configured to, when the number of times the start touch points corresponding to the slide gesture instructions received in M times on the touchscreen are distributed on each touch region are the same, locate the prompt box at an initial position.
